# EUROPÄISCHE PATENTSCHRIFT

(11) **EP 0 976 612 B1**
(45) Veröffentlichungstag und Bekanntmachung des Hinweises auf die Patenterteilung: **21.03.2007**
(21) Anmeldenummer: 99110082.7
(22) Anmeldetag: 22.05.1999
(51) Int. Cl.: B60Q 1/20, F21V 14/00

(54) **Nebel-Scheinwerfer für Fahrzeuge**
Fog lamp for vehicles
Projecteur antibrouillard pour véhicules

(30) Priorität: 31.07.1998 DE 19834563
(43) Veröffentlichungstag der Anmeldung: 02.02.2000
(73) Patentinhaber: Bayerische Motoren Werke Aktiengesellschaft, 80788 München (DE)
(72) Erfinder: Huhn, Wolfgang, 85247 Schwabhausen (DE); Hahn, Wolfgang, 85247 Schwabhausen (DE)

(56) Entgegenhaltungen:
- EP-A- 0 780 823
- EP-A- 0 833 099
- DE-A- 4 418 135
- DE-A- 4 419 365
- FR-A- 2 727 497
- GB-A- 2 192 052

## Beschreibung

Die Erfindung bezieht sich auf einen Nebel-Scheinwerfer für Fahrzeuge, der einen bis in eine Entfernung von ca. 30 m vor dem Fahrzeug reichenden Ausleuchtbereich besitzt

Derartige Nebel-Scheinwerfer sind bei heutigen Automobilen üblich. Sie werden nach den gültigen Richtlinien bezüglich der Lichtverteilungskennlinien ausgelegt und hergestellt. Dabei zielen die lichttechnischen Werte der Nebelscheinwerfer nicht auf eine verbesserte Objekterkennbarkeitsreichweite, sondern auf eine gute Seitenführung des Fahrers ab. Daher hat der Lichtkegel nach vorne nur eine vergleichsweise kurze Reichweite und nach links und rechts im Nahbereich eine hohe Lichtintensität, um die Straßenbegrenzungs- und Fahrbahnmittenlinien gut erkennbar zu machen.

Ein gattungsgemäßer Nebel-Scheinwerfer ist aus EP-A-0 833 099 bekannt.

Im Fall der Sichtbeeinträchtigung des Fahrers durch Nebel und besonders in Nachtsituationen wird normalerweise das Abblendlicht zur Detektion vorausfahrender Objekte und das Nebellicht zur besseren Seitenführung auf der Straße eingeschaltet. Einer der sichtweitenbegrenzenden Faktoren ist die durch die Scheinwerfer, hauptsächlich der Abblend- und der Fernscheinwerfer, im Nebel erzeugten Streuleuchtdichte, die sich den aus der Umwelt kommenden Objektkontrasten überlagert und diese somit vermindert. Durch die Nebel-Scheinwerfer werden diese Einschränkungen aufgrund deren kurzer Reichweite nicht kompensiert.

Der Erfindung liegt die Aufgabe zugrunde, einen Scheinwerfer der eingangs genannten Art zu schaffen, bei dem die Objekterkennbarkeit verbessert und somit ein Sicherheitsgewinn für den Fahrer erzielt ist.

Die Erfindung löst diese Aufgabe mit den Merkmalen des Patentanspruchs 1. Die Erfindung geht von dem Grundprinzip aus, die fernlichtartige Komponente dann vorzusehen, wenn sie aufgrund einer reduzierten Sichtweite und/oder Nebel notwendig und sinnvoll ist. Diese Komponente kann auch abhängig von der tatsächlichen oder zu erwartenden Sichtweite in ihrer Reichweite und/oder Intensität variabel sein, d.h. um so weitreichender und intensiver sein, je geringer die Sichtweite ist. Da die Streulichtdichte auch von der Anbauhöhe des Scheinwerfers abhängt und mit der Anbauhöhe steigt, läßt sich die Streulichtdichte durch eine entsprechend tiefe Anordnung des Scheinwerfers gering halten.

Die Patentansprüche 2 ff. zeigen verschiedene konstruktive Gestaltungen des Scheinwerfers selbst, mit denen die Erfindung realisierbar ist.

Die Aktivierung des Fernlichtanteils kann manuell erfolgen, ähnlich dem Zu- oder Abschalten eines Zusatzscheinwerfers. Sie kann, wie im Patentanspruch 7 gezeigt, auf einer von externer Infrastruktur zur Verfügung gestellten Information beruhen, Sie kann auch, wie im Patentanspruch 8 angegeben, über indirekte Indikatoren gesteuert werden, wie Scheibenwischerschalter - Stufe Intervall, Stufe 1, Stufe 2, und/oder einen Sichtweiten-, Regen- oder µ-Wertsensor.

Anhand der Zeichnung ist die Erfindung weiter erläutert. Es zeigt
- Fig. 1: die Lichtverteilung des erfindungsgemäßen Nebel-Scheinwerfers in der Draufsicht und
- Fig. 2: die Lichtverteilung von Fig. 1 im Querschnitt
- Fig. 3: ein erstes Ausführungsbeispiel eines derartigen Scheinwerfers in der Seitenansicht
- Fig. 4: eine Alternative zu Fig. 3 in Vorderansicht
- Fig. 5: eine dritte und
- Fig. 6: eine vierte Ausführungsform, beides ebenfalls in Seitenansicht

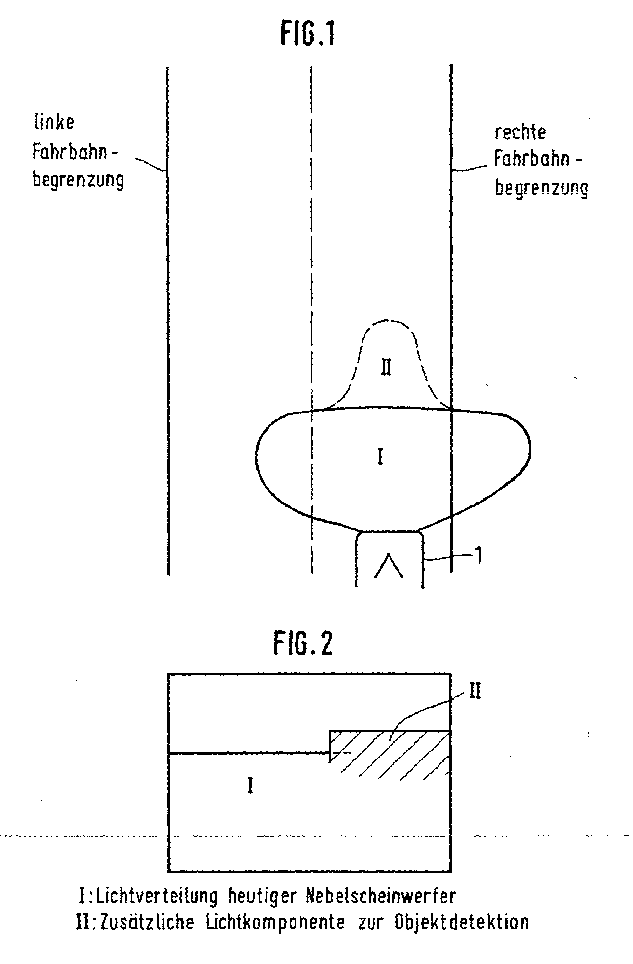

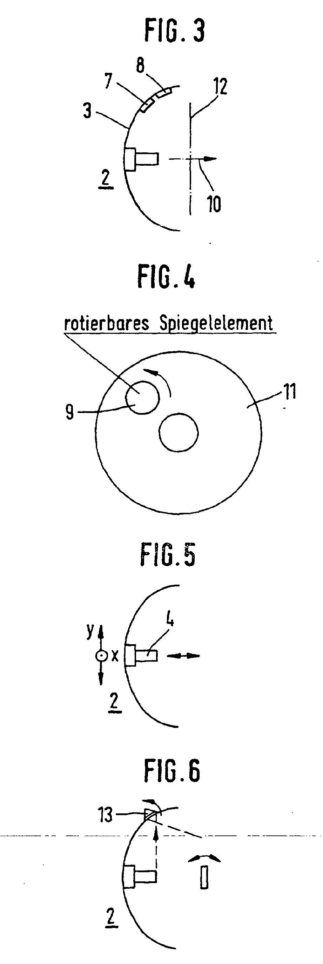

In Fig. 1 ist in der Draufsicht und Fig.2 im Schnitt und bezogen auf eine Ebene senkrecht zur optischen Achse ein konventioneller Nebel-Scheinwerfer dargestellt, der einen vor einem Fahrzeug 1 liegenden Bereich I ausleuchtet. Der Bereich I reicht bis zu einer Entfernung von ca. 30 m vor dem Fahrzeug 1.

Erfindungsgemäß soll der Nebel-Scheinwerfer eine zusätzliche fernlichtähnliche Lichtkomponente II besitzen, die abhängig von der Sichtweite aktivierbar ist und die einen Bereich beleuchtet, der über den Bereich I hinausgeht.und der im Querschnitt in Fig. 2 gezeigt ist.

Die Einschaltung bzw. Reduktion der in den Bereich II einfallenden Lichtmenge kann auf unterschiedliche Weise vorgenommen werden. In Fig. 3 ist eine Möglichkeit gezeigt. Der Scheinwerfer 2 mit Reflektor 3 und Lampe 4 besitzt innerhalb des Reflektors 3 verstellbare Reflektorelemente 7 und 8, bei denen es sich um rotierende oder klappbare Spiegelsegmente oder mikromechanisch bewegte Spiegelelemente handeln kann. Diese werden je nach dem gewünschten Maß des Fernlichtanteils wirksam gemacht, indem sie aus der Oberfläche des Reflektors 3 hervortreten und dadurch Licht, das ansonsten nur in den Bereich I abgestrahlt wird, in den Bereich II reflektiert.

In Fig. 4 ist eine Ausführungsform gezeigt, bei der ein Spiegelelement 9 vorgesehen ist, das um die Achse 10 des Scheinwerfers rotierbar ist. Das Spiegelelement befindet sich beispielsweise auf einer lichtdurchlässigen Scheibe 11 etwa an dem Ort, der in Fig. 3 durch einen senkrechten Strich 12 charakterisiert ist. Befindet sich das Spiegelelement auf dem Zenit, so entfaltet es seine maximale Wirkung. Es verhindert einen Lichtaustritt aus dem Scheinwerfer in Richtung des Bereichs II. Wird das Spiegelelement abgesenkt, läßt es zunehmend Licht aus dem Scheinwerfer in den Bereich II eintreten. Auf diese Weise ist es möglich, den Fernlichtanteil variabel zu gestalten.

Bei Fig. 5 ist die Lampe 4 innerhalb des Reflektors 3 beweglich. Sie kann beispielsweise nach oben geschwenkt oder aber in einer waagerechten Ebene verfahrbar sein. Dabei genügt eine Bewegung um wenige Millimeter, um die gewünschte Lichtverteilung bzw. Änderung der Lichtverteilung zu erzeugen.

Beim Ausführungsbeispiel von Fig. 6 sind Prismen 13 vorgesehen, die in den Strahlengang gebracht und/oder darin rotiert oder verschoben werden. Auch damit läßt sich die gewünschte Lichtverteilungsänderung erzeugen.

Durch die Erfindung vergrößert sich beispielsweise die Objekterkennbarkeitsreichweite des bei einem angenommenen 10%igen Fernlichtanteil ausgestatteten Nebel-Scheinwerfers in der Verbindung mit einem konventionellen Abblendlicht um ca. 23% bei 100m und um ca. 58% bei 250m Normsichtweite, bezogen auf eine konventionelle Abblendlicht-/Nebel-Scheinwerfer-Verbindung..

## Patentansprüche

1. Nebel-Scheinwerfer für Fahrzeuge, der einen bis in eine Entfernung von ca. 30 m vor dem Fahrzeug reichenden Ausleuchtbereich (I) besitzt, **gekennzeichnet durch** einen zentralen fernlichtartigen Lichtanteil (II), der in Fahrtrichtung über den Ausleuchtbereich (I) hinausreicht.

2. Scheinwerfer nach Anspruch 1, **dadurch gekennzeichnet, daß** zur Erzeugung des fernlichtartigen Lichtanteils (II) ein zusätzliches optisches Element (7, 8, 9) innerhalb des Scheinwerfers (2) vorgesehen ist, das in seiner Wirkung aktivierbar und deaktivierbar ist.

3. Scheinwerfer nach Anspruch 2, **dadurch gekennzeichnet, daß** es sich bei dem Element (7, 8, 9) um ein Spiegelelement handelt.

4. Scheinwerfer nach Anspruch 3, **dadurch gekennzeichnet, daß** die Bewegung des Spiegelelements (9) rotatorisch bezüglich der Scheinwerferachse erfolgt.

5. Scheinwerfer nach einem der Ansprüche 1 bis 4, **dadurch gekennzeichnet, daß** zur Änderung der Lichtverteilung die Lampe (4) innerhalb des Scheinwerfers verfahrbar ist.

6. Scheinwerfer nach einem der Ansprüche 1 bis 5, **dadurch gekennzeichnet, daß** der fernlichtartige Lichtanteil (II) bei einer geringen Sichtweite und/oder einer hohen Nebeldichte eine kürzere Reichweite besitzt als bei großer Sichtweite und/oder geringer Nebeldichte.

7. Scheinwerfer nach einem der Ansprüche 1 bis 6, **dadurch gekennzeichnet, daß** die Information über Sichtweite und/oder Nebeldichte von außerhalb kommt.

8. Scheinwerfer nach einem der Ansprüche 1 bis 6, **dadurch gekennzeichnet, daß** die Information über Sichtweite und/oder Nebeldichte im Fahrzeug gewonnen wird.

## Claims

1. A motor-vehicle fog light having an illumination range (I) up to a distance of about 30 m in front of the vehicle, **characterised by** a central main beam-like light component (II) extending beyond the illumination range (I) in the direction of travel.

2. A light according to claim 1, **characterised in that** the main beam-like light component (II) is generated by an additional optical element (7, 8, 9) inside the light (2) and adapted to be activated and inactivated.

3. A light according to claim 2, **characterised in that** the element (7, 8, 9) is a mirror element.

4. A light according to claim 3, **characterised in that** the mirror element (9) is moved in rotation relative to the fog light axis.

5. A light according to any of claims 1 to 4, **characterised in that** the lamp (4) is movable inside the fog light in order to alter the light distribution.

6. A light according to any of claims 1 to 5, **characterised in that** the main beam-like light component (II) has a shorter range at low visibility and/or in thick fog than at high visibility and/or in thin fog.

7. A light according to any of claims 1 to 6, **characterised in that** the information about visibility and/or fog thickness comes from outside.

8. A light according to any of claims 1 to 6, **characterised in that** the information about visibility and/or fog thickness is obtained in the vehicle.

## Revendications

1. Projecteur antibrouillard pour véhicules, avec une zone d'éclairage (I) allant jusqu'à une distance de 30 m environ devant le véhicule,
**caractérisé par**
une composante de lumière centrale de type feu de route (II) qui dépasse la zone d'éclairage (I) dans la direction de la marche.

2. Projecteur selon la revendication 1,
**caractérisé en ce que**
pour générer la composante de lumière de type feu de route (II), un élément optique (7, 8, 9) supplémentaire est prévu à l'intérieur du projecteur (2), dont l'effet peut être activé et désactivé.

3. Projecteur selon la revendication 2,
**caractérisé en ce que**
l'élément (7, 8, 9) est un élément de miroir.

4. Projecteur selon la revendication 3,
**caractérisé en ce que**
le mouvement de l'élément de miroir (9) est une rotation autour de l'axe du projecteur.

5. Projecteur selon l'une quelconque des revendications 1 à 4,
**caractérisé en ce que**
pour modifier la diffusion de lumière, on peut déplacer la lampe (4) à l'intérieur du projecteur.

6. Projecteur selon l'une quelconque des revendications 1 à 5,
**caractérisé en ce que**
la composante de lumière de type feu de route (II) présente un rayon plus réduit en présence d'une faible visibilité et/ou d'un brouillard dense qu'en présence d'une grande visibilité et/ou d'une faible densité de brouillard.

7. Projecteur selon l'une quelconque des revendications 1 à 6,
**caractérisé en ce que**
l'information concernant la visibilité et/ ou la densité de brouillard vient de l'extérieur.

8. Projecteur selon l'une quelconque des revendications 1 à 6,
**caractérisé en ce que**
l'information concernant la visibilité et/ou la densité de brouillard est obtenue dans le véhicule.
